# EUROPÄISCHE PATENTSCHRIFT

(11) **EP 1 832 352 B1**
(45) Veröffentlichungstag und Bekanntmachung des Hinweises auf die Patenterteilung: **23.11.2011**
(21) Anmeldenummer: 07004993.7
(22) Anmeldetag: 11.03.2007
(51) Int. Cl.: B07B 1/12, B07B 1/28, B65G 25/02

(54) **Sortiervorrichtung mit Kurbelwelle**
Sorting device with crankshaft
Dispositif de tri doté d'un arbre à manivelle

(30) Priorität: 11.03.2006 DE 102006011653
(43) Veröffentlichungstag der Anmeldung: 12.09.2007
(73) Patentinhaber: Hartner, Helmut, 89441 Medlingen (DE)
(72) Erfinder: Hartner, Tobias, 89441 Medlingen (DE)
(74) Vertreter: Fiener, Josef

(56) Entgegenhaltungen:
- EP-A- 0 882 521
- DE-U1- 29 904 262
- US-A- 666 865
- US-A- 4 653 344

## Beschreibung

Die Erfindung betrifft eine Sortiervorrichtung gemäß den oberbegrifflichen Merkmalen des Anspruches 1, insbesondere eine Sortiervorrichtung für Papier- und Kartonageabfälle.

Die Sortierung von Papier- und Kartonageabfällen erfolgt mit verschiedenen Vorrichtungen, meist nach Format mit Sieböffnungen in Förderleisten oder mittels Schüttlerkörpern. Aus der PCT - Patentanmeldung WO 00/53342 des Anmelders ist eine Sortiervorrichtung, insbesondere für Papier- und Kartonageabfälle bekannt, wobei der Sortiervorrichtung Recyclinggut zugeführt und Restgut über einen Auslass abgeführt wird. Hierbei besteht die Sortiervorrichtung aus mehreren nebeneinander angeordneten Förderleisten, welche an zwei Kurbelwellen gelagert sind, wobei die Förderleisten an ihrer Oberseite Mitnehmer aufweisen. Die Kurbelwellen weisen zueinander versetzte Wellenkröpfungen auf. Aufgrund der parallelogrammartigen Verbindung der beiden Kurbelwellen über die Förderleisten ergibt sich eine Synchrondrehbewegung beider Kurbelwellen, obwohl nur eine Kurbelwelle angetrieben ist. Die Kurbelwellen sind an jeweils zwei Seitenlagern, vorzugsweise am Rahmen der Sortiervorrichtung, gelagert. Nachteilig ist hierbei, insbesondere bei größeren Breiten der Sortiervorrichtung und damit großen Längen der Kurbelwellen, dass die Kurbelwellen sehr belastet werden, so dass deren mögliche Drehzahlen und Traglasten begrenzt sind. Hierdurch können Schwingungen außerhalb des zulässigen Toleranzbereiches mit Verschleißerscheinungen, beispielsweise in den Lagern, auftreten. Zudem ist die Herstellung solcher gekröpften Kurbelwellen sehr aufwändig, da die radialen Kröpfungen meist genau gebogen oder geschmiedet werden müssen. Weiterhin ist dadurch die Exzentrizität fest vorgegeben und der Austausch der Lager aufwändig.

Demzufolge liegt der Erfindung die Aufgabe zugrunde, eine Sortiervorrichtung zu schaffen, die die vorstehenden Nachteile beseitigt und insbesondere eine einfachere Bauweise bietet.

Diese Aufgabe wird gelöst durch eine Sortiervorrichtung gemäß den Merkmalen des Anspruches 1. Vorteilhafte Ausgestaltungen sind Gegenstand der Unteransprüche.

Neuerungsgemäß besteht die Kurbelwelle der Sortiervorrichtung aus einer ungekröpften, geraden Welle, auf der mehrere Exzenterscheiben aufgeschoben und durch Spannsätze reibschlüssig verbunden sind. Die Exzenterscheiben sind in ihrer jeweiligen Position bezüglich der benachbarten Exzenterscheibe voreilend oder nacheilend montiert, z.B. im Winkel um 60° versetzt. Die Position bzw. Verdrehung der Exzenterscheiben entspricht dabei der Auslenkung (Exzentrizität) einer radial gekröpften Kurbelwelle. Bei Drehung der Welle werden die Exzenterscheiben somit ebenfalls gedreht und beschreiben mit den Förderleisten (Schüttlerkörper) eine Bahn, die zum Schütteln bzw. Weitertransport des Recyclinggutes führt. Die Kurbelwelle ist in einem vormontierten Trägergestell als eine Montageeinheit ausgeführt. Dabei kann diese Montageeinheit auch bereits mit einem Antriebsmotor ausgestattet werden, so dass diese an der Sortiervorrichtung besonders einfach montiert bzw. demontiert werden kann, z.B. zur Wartung. Des weiteren ist auch eine zentrische Lagerung oder Kupplung am Trägergestell möglich.

In die Exzenterscheiben ist bevorzugt eine abgedichtete Lagerung integriert, wobei der äußere Lagerring mit den jeweiligen Förderleisten (Schüttlerkörper) verbunden ist und so als Anschlussplatte dient. Bevorzugt sind dabei an der antriebsseitigen Kurbelwelle elastische Gummi-Metallbuchsen zwischengeschaltet. Diese elastische Verbindung zur Förderleiste hin dient zur Absorbierung von Stößen und zum Ausgleich von Rundlauftoleranzen.

In den Exzenterlagern sind bevorzugt geteilte Lager eingebaut, welche einen Austausch ermöglichen, ohne dass die Kurbelwelle aus der Maschine entfernt werden muss, bzw. alle Exzenterscheiben demontiert werden müssen. Durch die variable Längseinteilung/Anordnung der Exzenterlager sind unterschiedliche Baubreiten möglich (Anpassung an Kundenwünsche). Durch die Abdeckung der Exzenterscheiben werden zuverlässig Umwicklungen verhindert. Dies ist bei einer gekröpften Kurbelwelle kaum möglich. Durch Veränderung der Exzentrizität (Einsatz größerer oder kleinerer Exzenterlager) lässt sich zudem die Kurbelwelle an das zu sortierende Material anpassen. Alternativ kann die Exzentrizität einstellbar gestaltet werden. Durch die Montage der Nabe, welche die Kurbelwelle aufnimmt, mittels Schraubenverbindungen in Langlöchern in der Exzenterscheibe oder einer weiteren, darin eingesetzten Exzenterscheibe lässt sich die Exzentrizität stufenlos und rasch einstellen.

Nachfolgend wird ein Ausführungsbeispiel der Sortiervorrichtung anhand der Zeichnungen näher erläutert und beschrieben. Hierbei zeigen:
- Fig. 1: eine Gesamtansicht einer Sortiervorrichtung mit Kurbelwellen;
- Fig. 2: eine Gesamtansicht einer Kurbelwelle mit versetzten Exzenterscheiben;
- Fig. 3: einen Schnitt durch eine Exzenterscheibe gemäß Fig. 2;
- Fig. 4: zwei Verbindungsarten zu Förderleisten der Sortiereinrichtung;
- Fig. 5: eine vormontierte Baueinheit der Kurbelwelle; und
- Fig. 6: zwei Exzenterscheiben mit verstellbarer Exzentrizität.

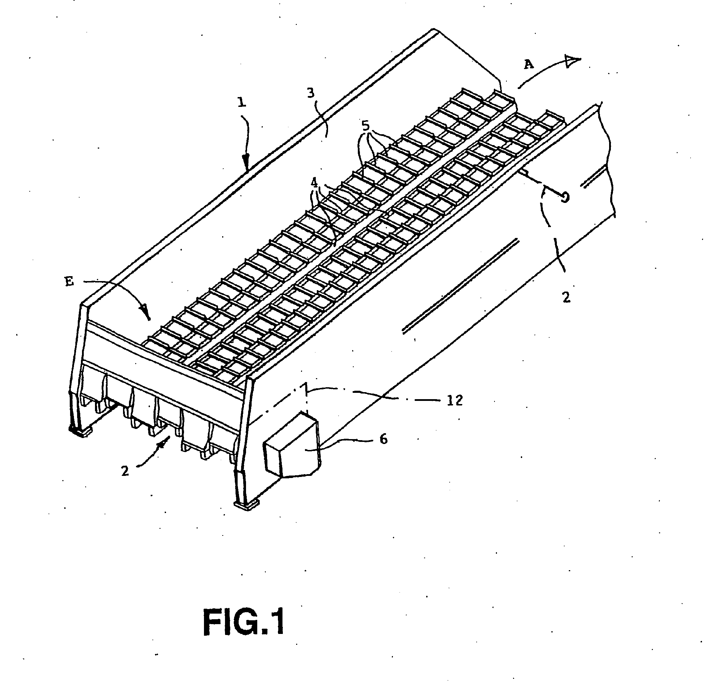

In Fig. 1 ist eine Sortiervorrichtung 1 mit einer Wanne 3 in Perspektivansicht gezeigt. An der hier linken Seite ist eine tiefer liegende Einfüllöffnung E vorgesehen, von der aus das Sortiergut mittels schräg ansteigenden Förderleisten 4 zu einem Auslass A transportiert wird, wobei kleineres Gut durch Öffnungen zwischen Mitnehmern 5 auf den Förderleisten 4 hindurch fallen kann. Die nebeneinander angeordneten Förderleisten 4 sind dabei auf zwei Kurbelwellen 2 gelagert, wobei hier nur eine, nämlich die hier untere durch einen Motor 6 angetrieben ist. Durch die Verbindung über die Förderleisten 4 wird die obere, hier nur angedeutete Kurbelwelle 2 synchron angetrieben, so dass die Antriebsbewegung zu wechselweise höhenversetzten Schüttlerflächen auf den Förderleisten 4 mit Vertikal- und Horizontal-Beschleunigungskomponenten auf das Sortiergut führt. Daher werden derartige Siebvorrichtungen auch als Ballistik-Separatoren bezeichnet.

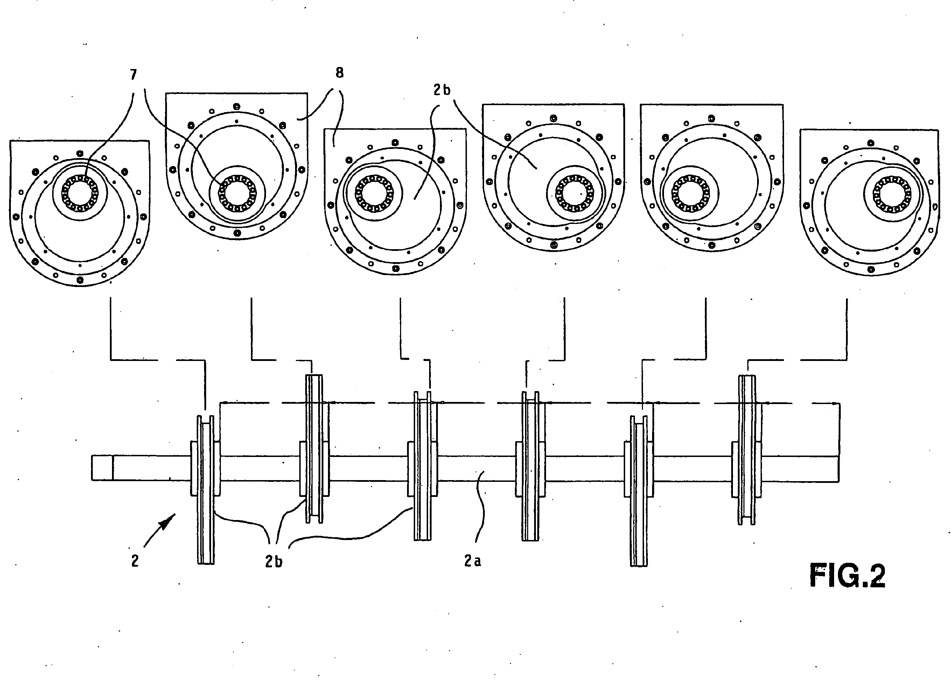

In Fig. 2 ist eine Kurbelwelle 2 für die Sortiervorrichtung 1 dargestellt, die neuerungsgemäß aus einer geraden Welle 2a mit darauf aufgeschobenen Exzenterscheiben 2b besteht. Die Welle 2a ist endseitig mit Stehlagern an den Seitenwänden der Wanne 3 oder bevorzugt an Stützen einer Montageeinheit (vgl.

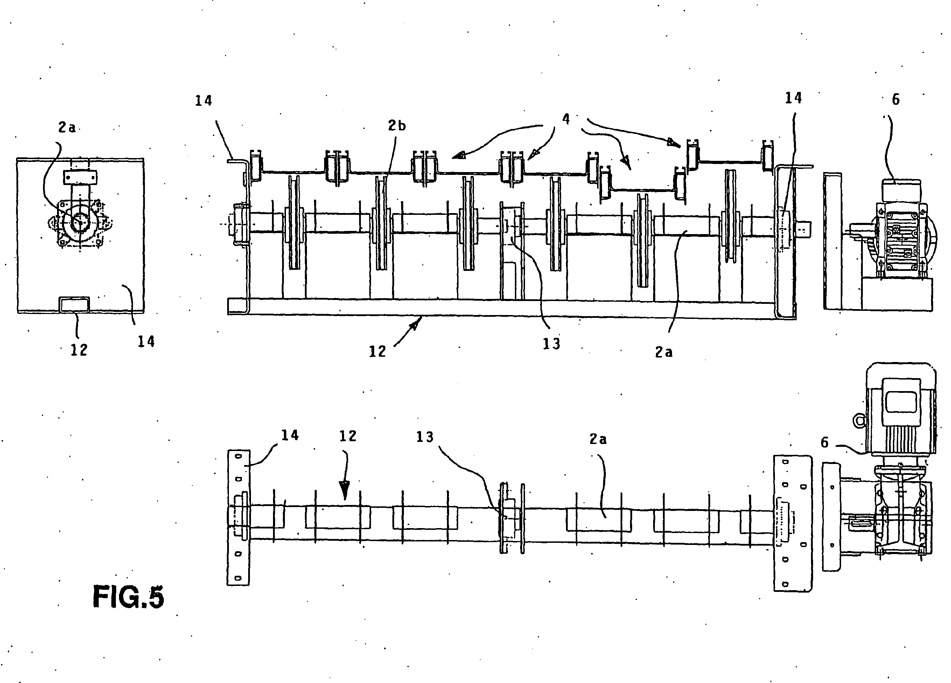

Fig. 5) gelagert und an einer Seite vom Motor 6 angetrieben. Die Exzenterscheiben 2b sind jeweils winkelversetzt auf der Welle 2a mittels Klemm- oder Spannsätzen 7 reibschlüssig verbunden, wie dies in der oberen Hälfte in Seitenansicht dargestellt ist. Hier sind 3 Paare mit jeweils 180° versetzt angeordnet, wobei der Teilungswinkel zwischen den Paaren 60° beträgt. Um die Exzenterscheiben 2b herum sind ringförmige Anschlussplatten 8 für die Förderleisten 4 bzw. Schüttlerkörper vorgesehen.

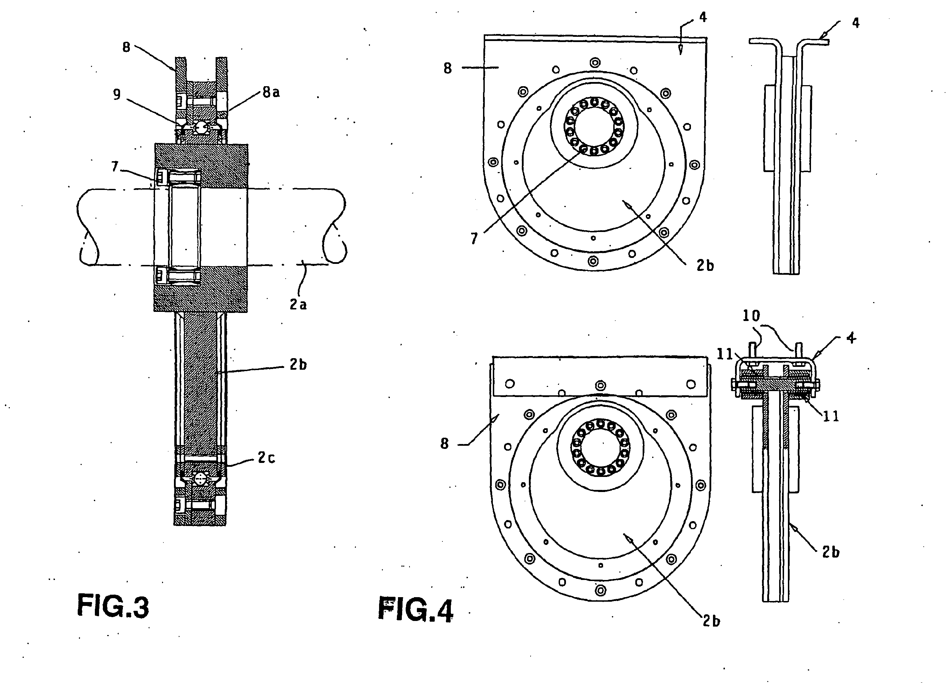

In Fig. 3 ist ein Schnitt durch eine Exzenterscheibe 2b gezeigt, woraus die Klemmung mittels der Spannsätze 7 auf der Welle 2a deutlich ersichtlich ist. Am Umfang der Exzenterscheibe 2b ist ein Lager 8a vorgesehen, mit dem die Anschlussplatte 8 in Art eines Außenrings drehbar gelagert ist. Das Lager 8a ist über Dichtungen 9 abgedichtet, wobei die Kugeln des Lagers 8a bevorzugt vier Berührungspunkte mit der Laufbahn aufweist, die bevorzugt aus vier eingelegten, geschliffenen Federstahlringen zwischen Exzenterscheibe 2b und Außenring bzw. Anschlussplatte 8 gebildet ist. Zudem sind im Bereich des Lagers 8 ringförmige Abdeckungen 2c vorgesehen, die wegen ihrer glattflächigen Gestaltung Umwicklungen praktisch ausschließen.

Zu den Förderleisten 4 hin, wie diese in Fig. 4 mit Pfeilen angedeutet sind, weist die Anschlussplatte 8 mehrere Schraubverbindungen 10 auf, mit denen diese direkt (obere Hälfte von Fig. 4) oder unter Zwischenschaltung von elastischen Gummi-Metallbuchsen 11 (untere Hälfte von Fig. 4) fixiert werden können. Dabei reicht es im allgemeinen aus, dass solche Buchsen 11 nur an der vom Motor 6 angetriebenen Kurbelwelle 2 vorgesehen sind, während die mitlaufende Kurbelwelle 2 über die Anschlussplatten 8 starr mit den Förderleisten 4 verbunden ist. Diese alternativen Anbringungsarten sind in Fig. 4 dargestellt.

In Fig. 5 ist eine bevorzugte Bauart der Kurbelwelle 2 entsprechend Fig. 1 dargestellt, indem diese in einem Trägergestell 12 als Montageeinheit ausgeführt ist. Diese Montageeinheit kann dann auf einfache und zeitsparende Weise modulartig in die Sortiervorrichtung 1 ein- bzw. ausgebaut werden, wie dies in Fig. 1 in Strichpunktlinien angedeutet ist. Dabei kann der Motor 6 ebenfalls am holmartigen Trägergestell 12 befestigt sein, nämlich durch einfaches Anflanschen an einer seitlich hochgezogenen Stütze 14, in der jeweils auch die Welle 2a endseitig gelagert ist. Dies ist insbesondere aus der hier linken Seitenansicht auf die motorseitige Stütze 14 ersichtlich, aber auch aus der in der unteren Hälfte dargestellten Draufsicht auf das Trägergestell 12. Die Welle 2a wird mit den aufgefädelten Exzenterscheiben 2b im Trägergestell 12 jeweils endseitig an den Lagern und ggf. einer Mittenlagerung oder Kupplung 13 gelagert, um dann die Förderleisten 4 oder Schüttlerkörper (vgl. obere Hälfte der Fig. 5) mittels der Schrauben 10 (vgl. Fig. 4) darauf zu montieren. Der Winkelversatz der Exzenterscheiben 2b der Kurbelwelle 2 sind dabei durch die Klemm- oder Spannsätze 7 auf der Welle 2a eingestellt, so dass die Anschlussplatten 8 die Drehbewegung der Kurbelwelle 2 sicher übertragen. Der Hub der Förderleisten 4 (wie dies in der oberen Hälfte der Fig. 5 für das rechte Förderleistenpaar 4 angedeutet ist) entspricht dabei der Exzentrizität der Exzenterscheiben 2b.

Wie vorstehend ausgeführt, kann das Trägergestell 12 als Montageeinheit einfach in die Sortiervorrichtung 1 eingesetzt werden, z.B. mit einem Gabelstapler oder Hubwagen von der in Fig. 1 linken Seite aus. Gleiches gilt für eine Demontage, z.B. für die Wartung der Antriebseinheit. Die Sortiervorrichtung 1 kann somit rasch wieder in Betrieb gehen, wobei die Förderleisten 4 in der Maschine verbleiben können. Insgesamt wird mit der vorliegenden Erfindung die praktische Nutzbarkeit wesentlich verbessert und der Aufbau erheblich vereinfacht.

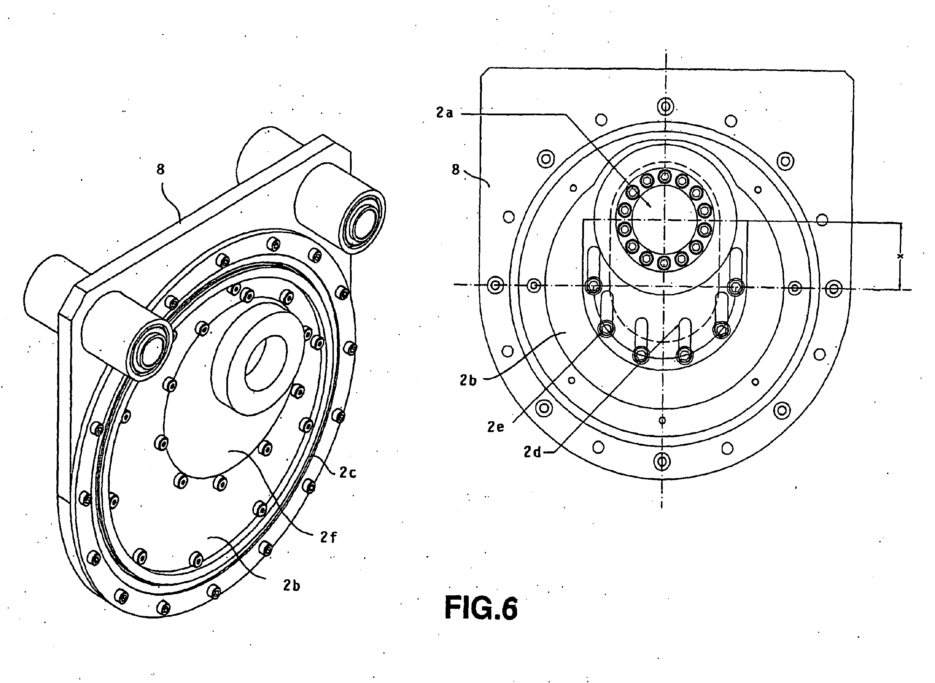

In den Exzenterscheiben 2b sind bevorzugt geteilte Lager eingebaut, welche einen Austausch ermöglichen, ohne dass die Kurbelwelle 2 aus der Sortiervorrichtung 1 entfernt werden muss, bzw. ohne dass alle Exzenterscheiben 2b demontiert werden müssen. Durch die variable Längseinteilung/Anordnung der Exzenterscheiben 2b sind zudem unterschiedliche Baubreiten möglich (Anpassung an Kundenwünsche). Durch die auch in Fig. 6 dargestellte, ringförmige Abdeckung 2c an der jeweiligen Exzenterscheibe 2b werden weiterhin zuverlässig Umwicklungen verhindert. Dies ist bei einer gekröpften Kurbelwelle kaum möglich und kann dadurch bei länglichen Sortiergütern, z.B. Folienschläuche erhebliche Probleme bereiten.

Durch die in Fig. 6 mit zwei Alternativen dargestellte Veränderung der Exzentrizität lässt sich zudem die Kurbelwelle 2 an das Sortiergut (z.B. Gewicht, Feuchte usw.) anpassen. Die Exzentrizität (mit dem Pfeil x am rechten Rand angedeutet) wird dabei eingestellt, indem die Nabe, welche die Welle 2a aufnimmt, mittels mehreren Schraubverbindungen 2e in Langlöchern 2d relativ zum Zentrum verschoben wird. Eine weitere Möglichkeit, die Exzentrizität stufenlos einzustellen, ist in der linken Hälfte von Fig. 6 perspektivisch dargestellt. Hierbei ist eine weitere, kleinere Exzenterscheibe 2f innerhalb der Exzenterscheibe 2b drehbar gelagert, um nach der Einstellung der gewünschten Exzentrizität arretiert zuwerden. Diese Einstellung ist besonders rasch und einfach durchzuführen.

## Patentansprüche

1. Sortiervorrichtung mit wenigstens einer von einem Motor angetriebenen Kurbelwelle, an der Förderleisten befestigt sind, wobei die Kurbelwelle (2) aus einer geraden Welle (2a) mit daran befestigten Exzenterscheiben (2b) gebildet ist, **dadurch gekennzeichnet, dass** die Kurbelwelle (2) in einem Trägergestell (12) als Montageeinheit gelagert ist.

2. Sortiervorrichtung nach Anspruch 1, **dadurch gekennzeichnet, dass** die Exzenterscheiben (2b) mit Spannsätzen (7) auf der Welle (2a) reibschlüssig befestigt sind.

3. Sortiervorrichtung nach Anspruch 1 oder 2, **dadurch gekennzeichnet, dass** die Exzenterscheiben (2b) jeweils von einer Anschlussplatte (8) zur Verbindung mit der jeweiligen Förderleiste (4) umgeben sind.

4. Sortiervorrichtung nach Anspruch 3, **dadurch gekennzeichnet, dass** die Anschlussplatte (8) jeweils über eine elastischen Buchse (11) mit der jeweiligen Förderleiste (4) verbunden ist.

5. Sortiervorrichtung nach Anspruch 4, **dadurch gekennzeichnet, dass** die elastische Buchsen (11) an der antreibenden Kurbelwelle (2) der Sortiervorrichtung (1) vorgesehen sind.

6. Sortiervorrichtung nach einem der Ansprüche 1 - 5, **dadurch gekennzeichnet, dass**
die Exzenterscheiben (2b) mit einem Teilungswinkel von 60° auf der Welle (2a) versetzt angeordnet sind.

7. Sortiervorrichtung nach Anspruch 1, **dadurch gekennzeichnet, dass** der Motor (6) an dem Trägergestell (12) angeflanscht ist.

8. Sortiervorrichtung nach Anspruch 1 oder 7, **dadurch gekennzeichnet, dass** das Trägergestell (12) eine mittige Lagerung und/oder Kupplung (13) aufweist.

9. Sortiervorrichtung nach einem der Ansprüche 1 bis 8, **dadurch gekennzeichnet, dass** die Exzentrizität der jeweiligen Exzenterscheibe (2b) einstellbar ist, insbesondere mittels Langlöchern (2d) in der Exzenterscheibe (2b) oder einer weiteren, darin eingesetzten Exzenterscheibe (2f).

10. Sortiervorrichtung nach einem der Ansprüche 1 bis 9, **dadurch gekennzeichnet, dass** die Exzenterscheiben (2b) ringförmige Abdeckungen (2c) aufweisen.

## Claims

1. Sorting device with at least one motor-driven crankshaft, to which conveyor bars are attached, wherein the crankshaft (2) is formed by a straight shaft (2a) with attached eccentrics (2b), **characterized in that**
the crankshaft (2) is mounted in a carrier frame (12) as an assembly unit,

2. Sorting device according to claim 1, **characterized in that** the eccentrics (2b) are fixed with locking devices (7) on the shaft (2a) by friction,

3. Sorting device according to claim 1 or 2, **characterized in that** the eccentrics (2b) are each surrounded by a connecting plate (8) for connection to the respective conveyor bar (4).

4. Sorting device according to claim 3, **characterized in that** the connecting plate (8) each has a resilient sleeve (11) with the respective conveyor bar (4).

5. Sorting device according to claim 4, **characterized in that** the resilient sleeve (11) are provided on the driving crankshaft (2) of the sorting device (1).

6. Sorting device according to one of claims 1 - 5, **characterized in that** the eccentrics (2b) are arranged offset on the shaft (2a) with a pitch angle of 60°.

7. Sorting device according to claim 1, **characterized in that** the motor (6) is flanged to the carrier frame (12).

8. Sorting device according to claim 1 or 7, **characterized in that** the carrier frame (12) has a central support and/or coupling (13).

9. Sorting device according to one of claims 1 to 8, **characterized in that** the eccentricity of each eccentric (2b) is adjustable, especially by means of slots (2d) in the eccentric (2b) or a further eccentric (2f) inserted therein.

10. Sorting device according to one of claims 1 to 9, **characterized in that** the eccentrics (2b) have ring-shaped covers (2c).

## Revendications

1. Dispositif de tri doté d'au moins un arbre à manivelle, entraîné par un moteur et auquel sont fixées des barres transporteuses, sachant que l'arbre à manivelle (2) est constitué d'un arbre rectiligne (2a) sur lequel sont fixés des disques excentriques (2b), **caractérisé en ce que** l'arbre à manivelle (2) en tant qu'ensemble monté est reçu dans un bâti porteur (12).

2. Dispositif de tri selon la revendication 1, **caractérisé en ce que** les disques excentriques (2b) sont fixés sur l'arbre (2a) par friction par des organes de serrage (7).

3. Dispositif de tri selon la revendication 1 ou 2, **caractérisé en ce que** les disques excentriques (2b) sont respectivement entourés par une plaque de raccordement (8) pour la liaison avec la barre transporteuse respective (4).

4. Dispositif de tri selon la revendication 3, **caractérisé en ce que** la plaque de raccordement (8) est reliée à la barre transporteuse respective (4) par l'intermédiaire d'une douille élastique (11).

5. Dispositif de tri selon la revendication 4, **caractérisé en ce que** les douilles élastiques (11) sont prévues sur l'arbre à manivelle menant (2) du dispositif de tri (1).

6. Dispositif de tri selon l'une des revendications 1 à 5, **caractérisé en ce que** les disques excentriques (2b) sont disposés sur l'arbre (2a) en étant décalés avec un pas angulaire de 60°.

7. Dispositif de tri selon la revendication 1, **caractérisé en ce que** le moteur (6) est bridé sur le bâti porteur (12).

8. Dispositif de tri selon la revendication 1 ou 7, **caractérisé en ce que** le bâti porteur (12) présente un palier et/ou un accouplement (13) central.

9. Dispositif de tri selon l'une des revendications 1 à 8, **caractérisé en ce que** l'excentricité du disque excentrique respectif (2b) est réglable, en particulier au moyen de trous oblongs (2d) dans le disque excentrique (2b) ou d'un disque excentrique supplémentaire (2f) installé dans le précédent.

10. Dispositif de tri selon l'une des revendications 1 à 9, **caractérisé en ce que** les disques excentriques (2b) présentent des éléments de recouvrement annulaires (2c).
